**Europäisches Patentamt**

**European Patent Office**

**Office européen des brevets**

(19)

(11) Veröffentlichungsnummer : **0 465 457 A2**

## (12) EUROPÄISCHE PATENTANMELDUNG

(21) Anmeldenummer : **91890124.0**

(22) Anmeldetag : **17.06.91**

(51) Int. Cl.$^5$ : **H04B 7/26,** H04B 7/15, H04Q 7/04

(30) Priorität : 03.07.90 AT 1414/90

(43) Veröffentlichungstag der Anmeldung : **08.01.92 Patentblatt 92/02**

(84) Benannte Vertragsstaaten : **AT BE CH DE DK ES FR GB GR IT LI LU NL SE**

(71) Anmelder : **KAPSCH AKTIENGESELLSCHAFT Wagenseilgasse 1 A-1121 Wien (AT)**

(72) Erfinder : **Fischer, Peter Hans, Dipl.-Ing. Speisingerstrasse 223 A-1238 Wien (AT)**
Erfinder : **Leutgeb, Reinhold, Ing. Schremsgasse 25-27 A-2380 Perchtoldsdorf (AT)**
Erfinder : **Diemling, Herbert, Dipl.-Ing. Apostelgasse 8/10 A-1030 Wien (AT)**

(74) Vertreter : **Holzer, Walter, Dipl.-Ing. et al Patentanwälte, Dipl.-Ing. Dr. techn. Schütz Alfred, Dipl.-Ing. Holzer Walter, Dipl.-Ing. Pfeifer Otto, Fleischmanngasse 9 A-1040 Wien (AT)**

(54) **System für adaptive Kanalfrequenzenversorgung eines Tunnels.**

(57) Vorrichtung zum selbsteinstellenden Versorgen eines Tunnels (1), einer Unterführung od.dgl. mit einem Abwärtsfrequenzkanal und einem zugeordneten Aufwärtsfrequenzkanal in einem Mobilfunksystem mit mehreren, von einer Basisstation (2) abstrahlbaren Abwärtsfrequenzkanälen und mehreren, von einer Mobilstation (3) abstrahlbaren, jeweils zugeordneten Aufwärtsfrequenzkanälen, wobei ein freiraum-Scannerempfänger (6, 10), der die von der Basisstation in den freiraum abgestrahlten Abwärtsfrequenzkanäle abtastet und auf einen vorerst freien Abwärtsfrequenzkanal einrastet, ein dem freiraum-Scannerempfänger (6, 10) frequenzsynchron nachgeschalteter Tunnel-Sender (7, 11), welcher diesen Abwärtsfrequenzkanal in den Tunnel abstrahlt, ein Tunnel-Scannerempfänger (8, 12), der die von der Mobilstation in den Tunnel abgestrahlten Aufwärtsfrequenzkanäle abtastet und auf einen aktiven Aufwärtsfrequenzkanal einrastet, und ein dem Tunnel-Scannerempfänger (8, 12) frequenzsynchron nachgeschalteter freiraum-Sender (9, 13) vorgesehen sind, welcher diesen Aufwärtsfrequenzkanal in den freiraum abstrahlt, und wobei der Tunnel-Scannerempfänger im eingerasteten Zustand den freiraum-Scannerempfänger auf den zugeordneten Abwärtsfrequenzkanal einstellt.

EP 0 465 457 A2

**Fig.1**

EP 0 465 457 A2

Die Erfindung betrifft eine Vorrichtung zum selbsteinstellenden Versorgen eines Tunnels, einer Unterführung od.dgl. mit einem Abwärtsfrequenzkanal (downlink frequency channel) und einem zugeordneten Aufwärtsfrequenzkanal (uplink frequency channel) in einem Mobilfunksystem mit mehreren, von einer Basisstation abstrahlbaren Abwärtsfrequenzkanälen und mehreren, von einer Mobilstation abstrahlbaren, jeweils zugeordneten Aufwärtsfrequenzkanälen.

Die Grundlagen, Funktionsweisen und Definitionen der erwähnten, im allgemeinen zellförmig aufgebauten Mobilfunksysteme sind z.B. in "Total Access Communications System, Mobile Station - Land Station, Compatibility Specification", Ausgabe 3, Oktober 1984, British Telecom Research Laboratories, oder der korrespondierenden US-Spezifikation US EIA CIS-3, EIA Engineering Department, angeführt.

Zur Zeit wird die Verbindung zwischen Mobilstation und Basisstation bei Durchfahrt durch einen Tunnel, eine Unterführung od.dgl. unterbrochen.

Prinzipiell besteht die Möglichkeit, auch im Tunnel eine Basisstation mit einer Funkzelle anzuordnen. Dies hat jedoch entscheidende Nachteile. Einerseits ist der Feldstärkegradient im Tunnel außerordentlich hoch, so daß die Zeit, die dem System bei der Tunneldurchfahrt zu einem Handover von einer Basisstation zur nächsten zur Verfügung steht, zu kurz ist. Bei Systemen, die kein Handover während einer bestehenden Verbindung zulassen, führt der schnelle Feldstärkeabfall zu einem Verlust der Verbindung. Anderseits ist das Heranführen der notwendigen Modulations- oder Amtsleitungen zu einer im Tunnel angeordneten Basisstation kostspielig und aufwendig.

Die Erfindung setzt sich daher zum Ziel, eine Vorrichtung der eingangs erwähnten Art zu schaffen, die im Tunnel eine betriebsichere Verbindung auf kostengünstige und einfache Weise zur Verfügung stellt.

Dieses Ziel wird erfindungsgemäß dadurch erreicht, daß ein Freiraum-Scannerempfänger, der die von der Basisstation in den Freiraum abgestrahlten Abwärtsfrequenzkanäle abtastet und auf einen vorerst freien Abwärtsfrequenzkanal einrastet, ein dem Freiraum-Scannerempfänger frequenzsynchron nachgeschalteter Tunnel-Sender, welcher diesen Abwärtsfrequenzkanal in den Tunnel abstrahlt, ein Tunnel-Scannerempfänger, der die von der Mobilstation in den Tunnel abgestrahlten Aufwärtsfrequenzkanäle abtastet und auf einen aktiven Aufwärtsfrequenzkanal einrastet, und ein dem Tunnel-Scannerempfänger frequenzsynchron nachgeschalteter Freiraum-Sender vorgesehen sind, welcher diesen Aufwärtsfrequenzkanal in den Freiraum abstrahlt, und daß der Tunnel-Scannerempfänger im eingerasteten Zustand den Freiraum-Scannerempfänger auf den zugeordneten Abwärtsfrequenzkanal einstellt.

Dadurch werden gerade nur Jene Frequenzkanäle in den Tunnel eingespeist, die für eine Verbindung benötigt werden. Würden alle im Freifeld vorhandenen Frequenzkanäle breitbandig in den Tunnel eingespeist werden, würde das zu nicht beherrschbaren Intermodulations- und Übersteuerungsproblemen führen. Das erfindungsgemäße System stellt sich nun selbsttätig auf die für eine Verbindung zu einer im Tunnel befindlichen Mobilstation notwendigen Frequenzkanäle ein und speist nur diese in den Tunnel ein bzw. überträgt diese aus dem Tunnel in den Freiraum. Das erfindungsgemäße System verlängert auf diese Weise den Sende- und Empfangsbereich der Basisstation adaptiv in den Tunnel hinein.

Bei Systemen mit einem kombinierten Ruf- und Verkehrskanal pro Verbindungskanal kann der Tunnel durch eine einzige derartige Vorrichtung mit einer Verbindung versorgt werden. Bei Systemen mit einem Rufkanal und einem getrennten Verkehrskanal pro Verbindungskanal sind zwei erfindungsgemäße Vorrichtungen notwendig. Darüberhinaus können selbstverständlich mehrere erfindungsgemäße Vorrichtungen an einem Tunnel angeordnet werden, um gleichzeitig Verbindungen mit mehreren im Tunnel befindlichen Mobilstationen herstellen zu können.

Eine Weiterbildung der Erfindung für Mobilfunksysteme mit einem festliegenden Abwärtsfrequenzkanal und einem festliegenden Aufwärtsfrequenzkanal, die jeweils allen Abwärts- und Aufwärtsfrequenzkanälen gemeinsam zugeordnet sind, zeichnet sich dadurch aus, daß ein frequenzeinstellbarer Freiraum-Empfänger, der den von den Basisstation in den Freiraum abgestrahlten festliegenden Abwärtsfrequenzkanal empfängt, ein dem FreiraumEmpfänger frequenzsynchron nachgeschalteter Tunnel-Sender, welcher diesen Abwärtsfrequenzkanal in den Tunnel abstrahlt, ein frequenzeinstellbarer Tunnel-Empfänger, der den von der Mobilstation in den Tunnel abgestrahlten festliegenden Aufwärtsfrequenzkanal empfängt, und ein dem Tunnel-Empfänger frequenzsynchron nachgeschalteter Freiraum-Sender vorgesehen sind, welcher diesen Aufwärtsfrequenzkanal in den Freiraum abstrahlt. Durch diese Maßnahme ist für den allen Verbindungskanälen gemeinsamen Kanal, z.B. einem gemeinsamen Rufkanal in Systemen mit getrennten Ruf- und Verkehrskanälen, keine weitere adaptive Tunnelversorgung vonnöten, sondern nur eine vereinfachte Ausführung mit fest eingestellten Empfängern. Der konstruktive Aufwand kann dadurch für solche Systeme gesenkt werden.

Bei beiden Ausführungsformen kann erfindungsgemäß vorgesehen werden, daß die Ausgänge der Freiraum-Empfänger, Freiraum-Scannerempfänger, Tunnel-Empfänger bzw. Tunnel-Scannerempfänger über Demodulatoren an eine Verarbeitungslogik geführt sind, die in Abhängigkeit vom Meldungsverkehr auf den Kanälen die Sende- und Empfangsfrequenzen einstellt und durch Verändern des Meldungsverkehrs nachführt,

3

belegt und freigibt.

Derartige Verarbeitungslogiken, z.B. Mikroprozessoren, sind einfach für diese Aufgaben programmierbar, wodurch der schaltungstechnische Aufwand gesenkt werden kann.

In diesem Sinne ist es auch vorteilhaft, wenn die Freiraum-Scannerempfänger bzw. Tunnel-Scannerempfänger durch von der Verarbeitungslogik angesteuerte frequenzeinstellbare Empfänger gebildet sind, wobei die Verarbeitungslogik auf Durchstimmen der Empfangsfrequenzen programmiert ist.

Die Verarbeitungslogik kann auch zur Überwachung herangezogen werden, ob die aktiven Verbindungskanäle mit einer dem Tunnelort zugeordneten Basisstation bestehen, oder ob es sich um sogenannte "verschleppte" Kanäle handelt. In diesem Fall sieht die Lehre der Erfindung vor, daß die Verarbeitungslogik bei einem nicht in einer eingespeicherten Kanaltabelle enthaltenen, aktiven Verbindungskanal die Sendeleistung der Freiraum-Sender reduziert. Dadurch wird ein Feldstärkeabfall erzeugt, der das System zu einem Handover zu der richtigen, zugeordneten Basisstation veranlaßt.

Bei allen Ausführungsformen der Erfindung ist es günstig, wenn zwischen einem Freiraum-Empfänger, Freiraum-Scannerempfänger, Tunnel-Empfänger bzw. Tunnel-Scannerempfänger und dem ihm jeweils nachgeschalteten Freiraum-Sender bzw. Tunnel-Sender ein Signalregenerator zwischengeschaltet ist. Auf diese Weise wird die Betriebssicherheit der hergestellten Verbindung wesentlich erhöht.

Dabei kann in einfacher Weise ein Freiraum-Empfänger, Freiraum-Scannerempfänger, Tunnel-Empfänger bzw. Tunnel-Scannerempfänger ein FM-Empfänger sein und der Signalregenerator durch den Begrenzerverstärker und das Kanalbandpaßfilter dieses FM-Empfängers gebildet sein, wodurch herkömmliche Empfängermodule einsetzbar sind.

Die Frequenzsynchronisation der Sender mit den vorgeschalteten Empfängern wird vorteilhafterweise dadurch erzielt, daß die Frequenzmischer eines Freiraum-Empfängers, Freiraum-Scannerempfängers, Tunnel-Empfängers bzw. Tunnel-Scannerempfängers mit den entsprechenden Frequenzmischern des jeweils nachgeschalteten Freiraum-Senders bzw. Tunnel-Senders jeweils an einen gemeinsamen Oszillator angeschlossen sind. Dies stellt eine einfache und sichere Art der Frequenzsynchronisation dar.

Ebenso kann jedoch auch der Frequenzmischer eines Freiraum-Senders bzw. Tunnel-Senders an einen steuerbaren Oszillator angeschlossen sein, der von einer Frequenzmeßstufe angesteuert ist, deren Eingang an den Ausgang des jeweils vorgeschalteten Freiraum-Empfängers, Freiraum-Scannerempfängers, Tunnel-Empfängers bzw. Tunnel-Scannerempfängers angeschlossen ist. Dadurch kann eine allfällige Frequenzdrift des Empfangssignales ausgeglichen werden. Die Frequenzmeßstufe ermittelt die Abweichung der empfangenen Frequenz von einer voreingestellten Sollfrequenz und stellt den Misch-Oszillator des Senders derart ein, daß nach der Mischung die gewünschte Sollfrequenz wieder erzielt wird.

Die Erfindung schafft weiters eine Vorrichtung zum Versorgen eines zwischen zwei Nachbarbasisstationen liegenden Tunnels mit je einem Verbindungskanal zu einer Basisstation, welche Vorrichtung sich dadurch auszeichnet, daß die Freiraum-Sender, Freiraum-Empfänger und Freiraum-Scannerempfänger einer ersten Vorrichtung zum selbsteinstellenden Versorgen eines Tunnels mit einem Abwärtsfrequenzkanal und einem zugeordneten Aufwärtsfrequenzkanal zur einen Seite des Tunnels und die Freiraum-Sender, Freiraum-Empfänger und Freiraum-Scannerempfänger einer zweiten Vorrichtung zum selbsteinstellenden Versorgen eines Tunnels mit einem Abwärtsfrequenzkanal und einem zugeordneten Aufwärtsfrequenzkanal zur anderen Seite des Tunnels angeordnet sind und daß die Sende- und Empfangsbereiche der Tunnel-Sender, Tunnel-Empfänger bzw. Tunnel-Scannerempfänger 10 bis 100 m, vorzugsweise 20 bis 50 m jeweils von dem der zugeordneten Basisstation gegenüberliegenden Tunnelportal ausgehend in den Freiraum verlängert sind.

Dadurch werden einerseits die Verbindungskanäle zu beiden Basisstationen in den Tunnel eingespeist und andererseits die Sende- und Empfangsbereiche der Tunnelversorgungen in den Freiraum hin verlängert, sodaß bei der Ausfahrt einer aktiven Mobilstation aus dem Tunnel noch kurzzeitig die Verbindung mit der Basisstation an der anderen Seite des Tunnels aufrechterhalten wird, um den System genügend Zeit zur Verfügung zu stellen, ein Handover zu der Basisstation an der Ausfahrtsseite des Tunnels durchzuführen.

Die Erfindung wird nun anhand der in den Zeichnungen dargestellten Ausführungsbeispiele näher erläutert. Es zeigt:

Fig.1 eine erfindungsgemäße Vorrichtung zum Versorgen eines Tunnels im Bereich einer einzelnen Basisstation mit zwei variablen Ab- bzw. Aufwärtsfrequenzkanälen und einem festliegenden Ab- bzw. Aufwärtsfrequenzkanal;

Fig.2 eine erfindungsgemäße Vorrichtung zum Versorgen eines zwischen zwei benachbarten Basisstationen liegenden Tunnels mit einem variablen Ab- bzw. Aufwärtsfrequenzkanal und einem festliegenden Ab- bzw. Aufwärtsfrequenzkanal;

Fig.3 eine erfindungsgemäße Tunnelversorgung, die von einer Verarbeitungslogik gesteuert ist;

Fig.4 einen erfindungsgemäßen Empfänger bzw. Scannerempfänger mit nachgeschaltetem, frequenzsynchronen Sender; und

Fig.5 einen erfindungsgemäßen Empfänger bzw. Scannerempfänger mit nachgeschaltetem Sender mit automatischer Frequenzkorrektur.

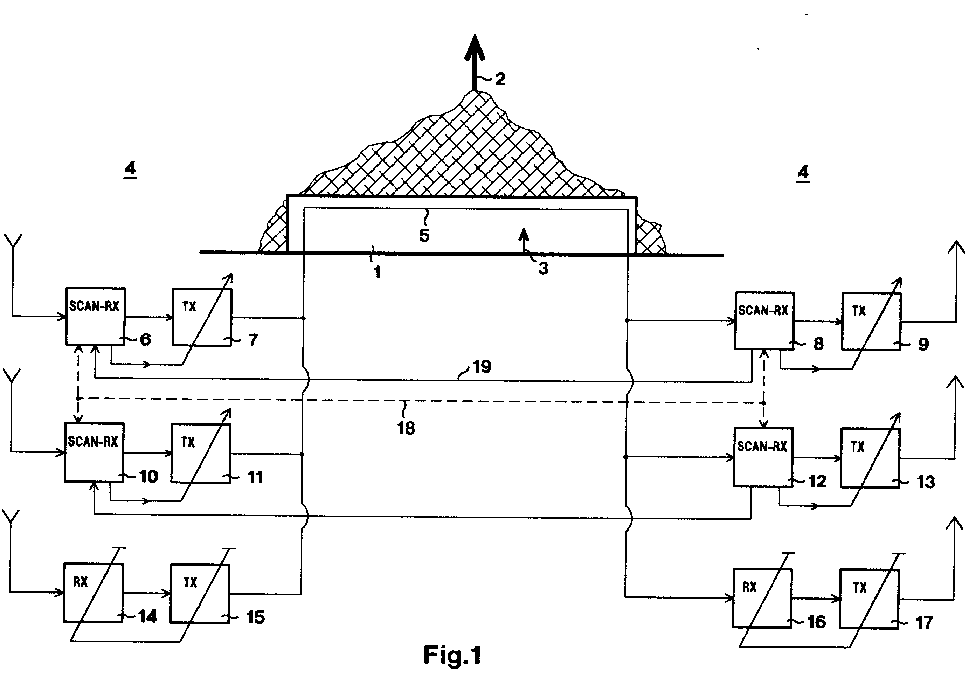

Fig.1 zeigt einen Tunnel 1, eine Basisstation 2 und eine sich bei dem dargestellten Beispiel im Tunnel bewegende Mobilstation 3. Der Freiraum 4 im Bereich der Tunnelportale liegt im Sende- und Empfangsbereich der Basisstation 2.

Durch den Tunnel 1 ist ein Strahlerkabel 5 geführt, z.B. ein Koaxialkabel mit statistisch verteilten Schirmschlitzen bekannter Art, das zu Zwecken des Radioempfangs bereits häufig in Tunnels verlegt ist.

Das Strahlerkabel 5 dient als gemeinsame Sende- und Empfangsantenne für die später noch ausführlich beschriebenen Tunnel-Sender 7, 11, 15, Tunnel-Scannerempfänger 8, 12 und Tunnel-Empfänger 16. Deren Antenneneingänge bzw. -ausgänge können an beliebiger Stelle an das Strahlerkabel 5 angeschlossen werden, sodaß nicht nur die in Fig.1 gezeigte Anordnung möglich ist, sondern z.B. auch alle Tunnel-Sender, -Empfänger und -Scannerempfänger an ein Ende des Strahlerkabels angeschlossen und damit im Bereich eines Tunnelportales angeordnet werden können. Ebenso können anstelle eines Strahlerkabels einzelne oder getrennte Antennen verwendet werden.

Für den einfachsten Anwendungsfall eines Mobilfunksystems, bei dem pro Verbindungskanal ein einziger, als kombinierter Abwärts-Ruf- u. Verkehrskanal dienender Abwärtsfrequenzkanal und ein einziger, als kombinierter Aufwärts-Ruf-u. Verkehrskanal dienender Aufwärtsfrequenzkanal vorgesehen sind, sind lediglich ein Freiraum-Scannerempfänger 6, ein Tunnel-Sender 7, ein Tunnel-Scannerempfänger 8 und ein Freiraum-Sender 9 erforderlich.

Der Freiraum-Scannerempfänger 6 empfängt einen entsprechenden Abwärtsfrequenzkanal von der Basisstation 2 und speist diesen über den nachgeschalteten Tunnel-Sender 7 in den Tunnel 1 ein. Der Tunnel-Scannerempfänger 8 empfängt den entsprechenden zugeordneten Aufwärtsfrequenzkanal von der Mobilstation 3 und sendet diesen in den Freiraum 4 aus.

Der Freiraum-Scannerempfänger 6 ist auf Einrasten auf den ersten, aufgefundenen, freien Abwärtsfrequenzkanal eingestellt. Der nachgeschaltete Tunnel-Sender 7 ist frequenzsynchronisiert und strahlt ebendiesen Abwärtsfrequenzkanal in den Tunnel ab. Diese Frequenzsynchronisation bedeutet, daß der Sender auf einer Funkfrequenz sendet, die der Empfangsfrequenz des ihm vorgeschaltete Empfängers gleich ist oder eindeutig zugeordnet ist.

Der Tunnel-Scannerempfänger 8 ist auf Einrasten auf den ersten, aufgefundenen, aktiven Aufwärtsfrequenzkanal eingestellt. Der nachgeschaltete Freiraum-Sender 9 ist frequenzsynchronisiert und strahlt ebendiesen Aufwärtsfrequenzkanal in den Freiraum ab.

Das Erkennen eines freien bzw. aktiven Frequenzkanals in den Scannerempfängern 6, 8 kann z.B. durch Empfangsfeldstärkemessungen erfolgen.

Für den Anwendungsfall, daß pro Verbindungskanal ein als Abwärts-Rufkanal dienender Abwärtsfrequenzkanal, ein als Abwärts-Verkehrskanal dienender weiterer Abwärtsfrequenzkanal, ein als Aufwärts-Rufkanal dienender Aufwärtsfrequenzkanal und ein als Aufwärts-Verkehrskanal dienender weiterer Aufwärtsfrequenzkanal vorgesehen sind, wird ein weiterer Satz Freiraum-Scannerempfänger 10, Tunnel-Sender 11, Tunnel-Scannerempfänger 12 und Freiraum-Sender 13 benötigt. Der eine Sender- u. Empfängersatz 6 - 9 dient zur Versorgung des Tunnels mit dem Rufkanal und der weitere Sender- u. Empfängersatz 10 - 13 zur Versorgung des Tunnels mit dem Verkehrskanal.

Die Scannerempfänger 6, 8, 10, 12 können dabei über Leitungen 18 miteinander verbunden sein, um sich gegenseitig so zu steuern, daß sie nicht auf denselben Frequenzkanälen einrasten.

Die Sender- u. Empfängersätze 6 - 9 und/oder 10 bis 13 können zum Versorgen eines Tunnels mit mehreren Verbindungskanälen beliebig vervielfacht werden. Auch in diesem Fall sollten die Scannerempfänger über Leitungen 18 untereinander verbunden sein und sich gegenseitig steuern, um das Einrasten auf gleichen Frequenzkanälen zu verhindern.

Für den Anwendungsfall bei einem Mobilfunksystem, bei dem ein bestimmter, festliegender Abwärtsfrequenzkanal und ein bestimmter, festliegender Aufwärtsfrequenzkanal allen Abwärtsund Aufwärtsfrequenzkanälen gemeinsam zugeordnet sind, z.B. wenn der Rufkanal allen Verbindungskanälen gemeinsam ist und nur die Verkehrskanäle für Jeden Verbindungskanal unterschiedlich sind, können ein frequenzeinstellbarer Freiraum-Empfänger 14 mit nachgeschaltetem, frequenzsynchronen Tunnel-Sender 15 und ein frequenzeinstellbarer Tunnel-Empfänger 16 mit nachgeschaltetem, frequenzsynchronen Freiraum-Sender 17 vorgesehen werden. Der einstellbare Freiraum-Empfänger 14 wird auf den festliegenden Abwärtsfrequenzkanal, z.B. auf den Abwärts-Rufkanal, eingestellt und der einstellbare Tunnel-Empfänger 16 auf den zugeordneten Aufwärtsfrequenzkanal, z.B. auf den Aufwärts-Rufkanal, eingestellt.

Die erfindungsgemäße Anordnung ist in der Lage, sämtliche Anforderungen hinsichtlich der auftretenden Betriebszustände zu erfüllen. Dies wird anhand eines Mobilfunksystems mit einem allen Verbindungskanälen gemeinsamen Rufkanal und einem Verkehrskanal pro Verbindungskanal erläutert:

Im **Ruhezustand** rastet der Freiraum-Scannerempfänger 6 auf einen freien Abwärts-Verkehrskanal ein und speist diesen über den Tunnel-Sender 7 in den Tunnel ein. Der Tunnel-Scannerempfänger 8 überwacht ständig, ob ein Aufwärts-Verkehrskanal im Tunnel verwendet wird.

Der allgemeine Abwärts-Rufkanal wird ständig über den Freiraum-Empfänger 14 und den Tunnel-Sender 15 in den Tunnel eingespeist und aus diesem über den Tunnel-Empfänger 16 und den Freiraum-Sender 17 in den Freiraum übertragen.

Die sich im Tunnel bewegenden Mobilstationen 3 rasten auf den eingespeisten Kanälen ein.

Ein **Ruf an eine Mobilstation im Tunnel** wird über den Abwärts-Rufkanal in den Tunnel übertragen. Die betroffene Mobilstation beantwortet den Ruf auf dem Aufwärts-Rufkanal, teilt der Basisstation dabei mit, daß sie einen freien Verkehrskanal zur Verfügung hat, und verwendet diesen. Das Aktiv-Werden eines Aufwärts-Verkehrskanales im Tunnel wird vom Tunnel-Scannerempfänger 8 erkannt. Der Tunnel-Scannerempfänger 8 rastet auf diesen Kanal ein und überträgt ihn über den Freiraum-Sender 9 zur Basisstation. Gleichzeitig hält der Tunnel-Scannerempfänger über die Leitung 19 den Scanning-Lauf des Freiraum-Scannerempfängers 6 an und stellt diesen zwangsweise auf den zugeordneten Abwärts-Verkehrskanal.

Bei einem **Ruf von einer Mobilstation im Tunnel** läuft derselbe prinzipielle Ablauf ab, nur daß der Verbindungsaufbau auf dem Aufwärts-Rufkanal beginnt und auf dem Abwärts-Rufkanal beantwortet wird.

Bei **Abbruch der Verbindung** wird der Aufwärts-Frequenzkanal frei, was vom Tunnel-Scannerempfänger 8 erkannt wird. Dieser setzt nun seinen Scanning-Lauf nach einem aktiven Aufwärts-Verkehrskanal wieder fort und hebt gleichzeitig die Blockierung und Zwangseinstellung des Freiraum-Scannerempfängers 6 über die Leitung 19 wieder auf.

Bei **Einfahrt einer aktiven Mobilstation** in den Tunnel findet der Tunnel-Scannerempfänger 8 den aktiven Aufwärts-Verkehrskanal auf, rastet auf diesen ein und stellt den Freiraum-Scannerempfänger zwangsweise auf den zugeordneten Abwärts-Verkehrskanal.

Bei **Ausfahrt einer aktiven Mobilstation** aus dem Tunnel setzt der Tunnel-Scannerempfänger 8 seine Suche nach einem aktiven Aufwärts-Verkehrskanal wieder fort und löst die Zwangseinstellung des Freiraum-Scannerempfängers, der fortan wieder einen freien Verkehrskanal sucht und auf diesen einrastet.

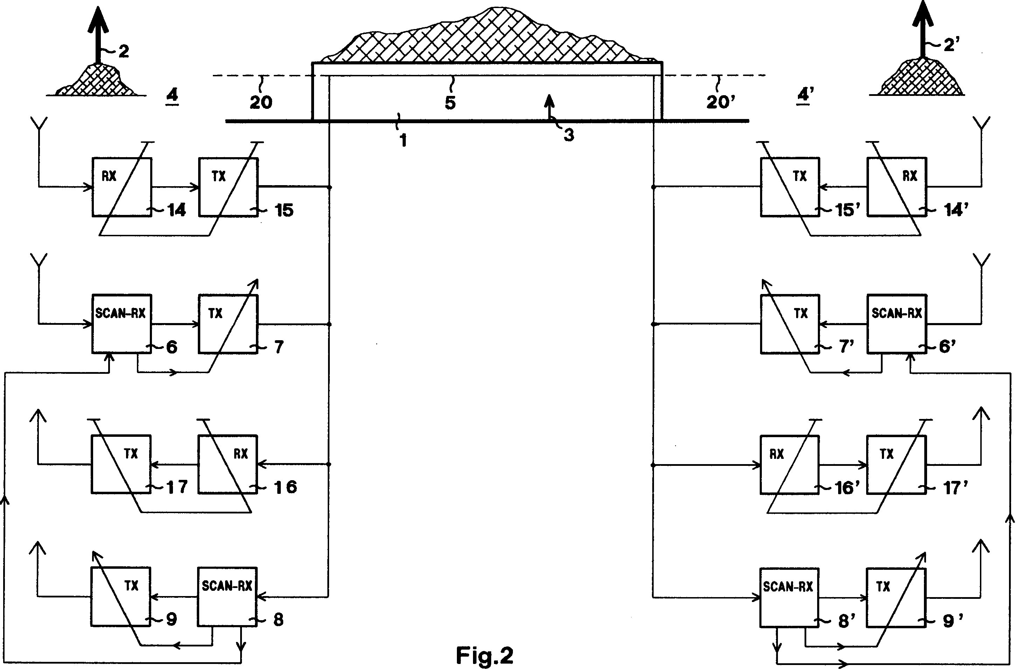

Die Fig.2 zeigt einen Tunnel 1, der zwischen zwei benachbarten Basisstationen 2 und 2' liegt, die im Mobilfunksystem als Nachbarzellen definiert sind. Der Freiraum 4 im Bereich des einen Tunnelportales liegt im Sende- und Empfangsbereich der Basisstation 2 und der Freiraum 4' in dem der Basisstation 2'.

Die gezeigte Vorrichtung dient zum Versorgen des Tunnels 1 mit je einem Verbindungskanal zu einer Basisstation 2, 2', wobei ein Verbindungskanal aus einem allen Verbindungskanälen zu einer Basisstation gemeinsamen Abwärts/Aufwärts-Rufkanal und einem Abwärts/Aufwärts-Verkehrskanal pro Verbindungskanal besteht.

Zu diesem Zweck sind die Freiraum-Sender, -Empfänger und -Scannerempfänger des Sender- u. Scannerempfängersatzes 6 - 9 und des Sender- u. Empfängersatzes 14 - 17 nach Fig.1 im Sende- und Empfangsbereich 4 angeordnet. Die Freiraum-Sender, -Empfänger und -Scannerempfänger gleichartiger Sätze 6' - 9' und 14' bis 17' sind im Sende- und Empfangsbereich 4' angeordnet.

Weiters sind die Sende- und Empfangsbereiche der Tunnel-Sender, -Empfänger und -Scannerempfänger Jeweils von dem der zugeordneten Basisstation gegenüberliegenden Tunnelportal ausgehend in den Freiraum verlängert, indem z.B. das Strahler-kabel um 10 bis 100 m, vorzugsweise 20 bis 50 m in den Freiraum verlängert ist, wie es die strichlierten Linien 20, 20' skizzieren. Dies dient dazu, einen Verbindungskanal mit der Basisstation 2 einer **aus dem Tunnel ausfahrenden Mobilstation** 3 im Freiraumbereich 4' noch einen gewissen Zeitraum aufrechtzuerhalten, damit das Mobilfunksystem genügend Zeit hat, selbsttätig ein Handover durchzuführen und einen neuen Verbindungskanal mit der Basisstation 2' aufzubauen. Dasselbe gilt für die umgekehrte Fahrtrichtung beim Ausfahren im Freiraumbereich 4, um die Verbindung mit der Basistation 2' noch aufrechtzuerhalten, bis das System eine neue Verbindung mit der Basisstation 2 aufgebaut hat.

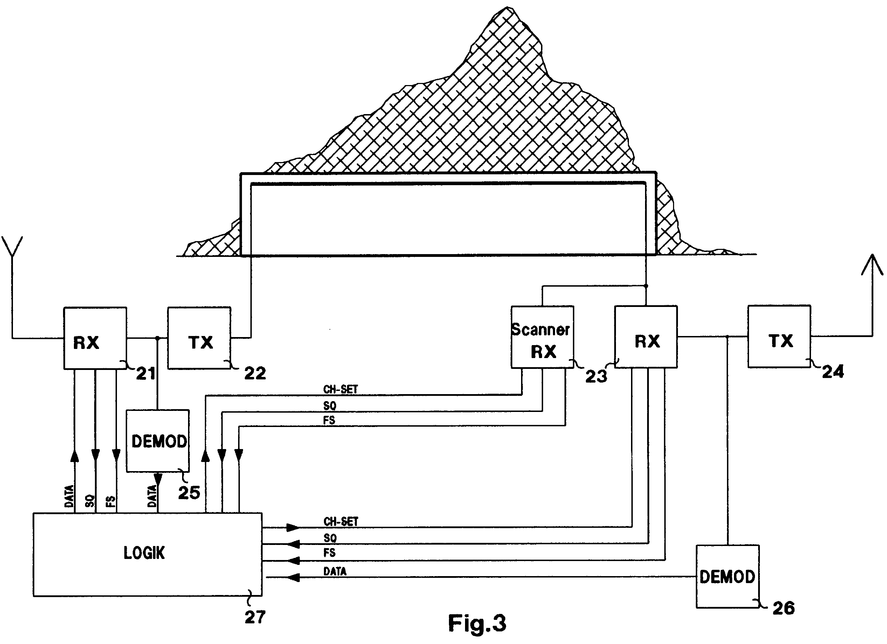

Fig.3 zeigt eine Anordnung aus einem frequenzeinstellbaren Freiraum-Emfänger 21 mit nachgeschaltetem, frequenzsynchronen Tunnel-Sender 22 und einem Tunnel-Scannerempfänger 23 mit nachgeschaltetem, frequenzsynchronen Freiraum-Sender 24, welche Anordnung in der Funktion dem Sender- u. Scannerempfängersatz 6 bis 9 nach Fig.1 entspricht.

Die Ausgänge des Empfängers 21 und des Scannerempfängers 23 sind über Demodulatoren 25 bzw. 26 an eine Verarbeitungslogik 27 geführt, die den Meldungsverkehr auf den Kanälen beobachtet und auswertet und in Abhängigkeit vom Meldungsverkehr die Sende- und Empfangsfrequenzen der Sender und Empfänger einstellt und unter Veränderung des Meldungsverkehrs diese Kanäle nachführt, belegt und freigibt.

Die Verarbeitungslogik 27 kann unter anderem auf Durchstimmen der Empfangsfrequenzen der Empfänger 21 und 23 programmiert sein und mit diesen Empfängern funktionell Scannerempfänger bilden.

Die Verarbeitungslogik kann eingespeicherte Kanaltabellen enthalten, die z.B. die Zuordnung der Frequenzkanäle zu den Basisstationen angeben. Wird ein Verbindungskanal aufgefunden, der Frequenzkanäle umfaßt, die den Basisstationen nicht zugeordnet sind, was einen von einer anderen Basisstation "verschleppten" Verbindungskanal anzeigt, reduziert die Verarbeitungslogik 27 die Sendeleistung der Freiraum-Sender 24, um die Basisstation zu einem Handover zu veranlassen.

Weiters kann die Verarbeitungslogik 27 die Kanalübertragungsgüte bewerten, indem sie auf statistische Auswertungen der übertragenen Signale programmiert ist.

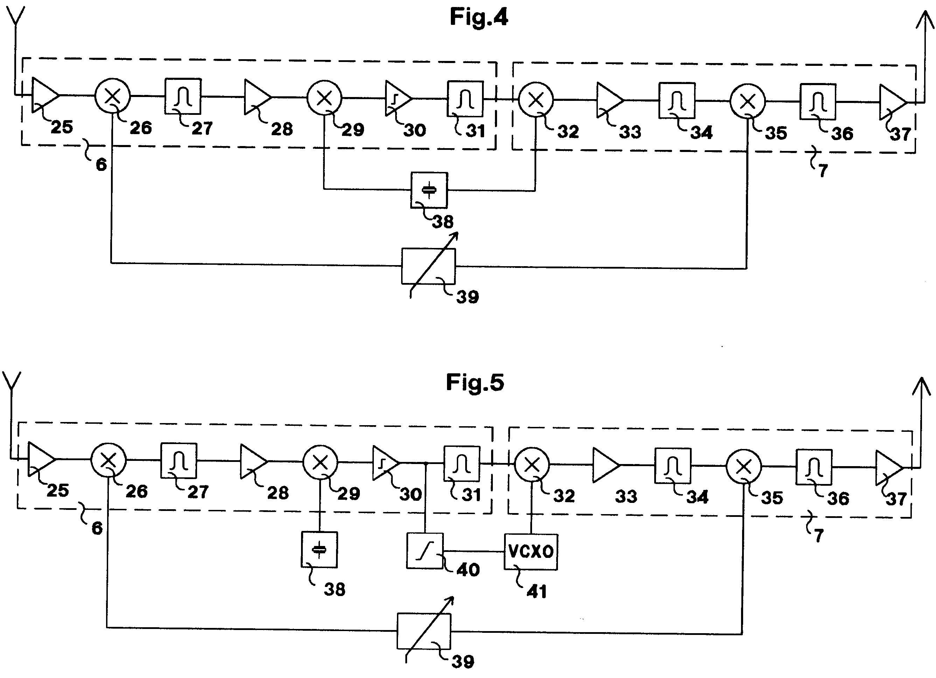

Die Fig.4 und Fig.5 zeigen die erfindungsgemäße Frequenzsynchronisation der Empfänger bzw. Scannerempfänger mit den ihnen nachgeschalteten Sendern. Der dargestellte Aufbau liegt den Sender/Empfänger-Serienschaltungen 6/7, 8/9, 10/11, 12/13, 14/15, 16/17, 6'/7', 8'/9', 14'/15', 16'/17', 21/22 und 23/24 zugrunde. Stellvertretend sind der Freiraum-Scannerempfänger 6 und der Tunnel-Sender 7 dargestellt.

Der Empfänger 6 ist ein FM-Empfänger mit zweistufiger Frequenzmischung bekannten Types und besteht aus einer Serienschaltung aus einem Hochfrequenz-Eingangsverstärker 25, einem ersten Frequenzmischer 26, einem Zwischenfrequenzbandpaßfilter 27, einem Zwischenfrequenzverstärker 28, einem zweiten Frequenzmischer 29, einem Begrenzerverstärker 30 und einem Kanalbandpaßfilter 30. Der Begrenzerverstärker 30 und das Kanabandpaßfilter 31 sorgen für eine Signalregeneration. Ebenso könnte jedoch dem Empfänger 6 ein spezieller Signalregenerator nachgeschaltet sein.

Der Sender 7 ist ein FM-Sender mit zweistufiger Frequenzmischung bekannten Types und besteht aus einer Serienschaltung aus einem ersten Frequenzmischer 32, einem Zwischenfrequenzverstärker 33, einem Zwischenfrequenzbandpaßfilter 34, einem zweiten Frequenzmischer 35, einem Hochfrequenzbandpaßfilter 36 und einem Hochfrequenzausgangsverstärker 37.

Die jeweils die reziproke Frequenzmischung durchführenden Frequenzmischer 29 und 32 bzw. 26 und 35 sind jeweils an einen gemeinsamen Oszillator 38 bzw. 39 angeschlossen. Dadurch ist die Frequenzsynchronisation des Senders mit dem vorgeschalteten Empfänger gewährleistet.

Der Oszillator 39 ist einstellbar und wird bei den Scannerempfängern 6, 8, 10, 12, 6', 8' von einer nicht gezeigten Steuereinrichtung in bekannter Art bzw. von der Verarbeitungslogik 27 angesteuert.

Fig.5 zeigt eine Schaltung zur Frequenzkorrektur der ersten Zwischenfrequenz des Senders 7, indem der erste Frequenzmischer des Senders nicht an den dem entsprechenden Empfängerfrequenzmischer zugeordneten Oszillator 38, sondern an einen eigenen, steuerbaren Oszillator 41 angeschlossen ist. Dieser wird von einer Frequenzmeßstufe 40 angesteuert, die an den Ausgang des Begrenzerverstärkers 30 des Empfängers 6 abgeschlossen ist und die Abweichung der Empfangsfrequenz von einer voreingestellten Sollfrequenz mißt und den Oszillator 32 so ansteuert, daß nach dem Frequenzmischer 32 die gewünschte Sollzwischenfrequenz auftritt.

## Patentansprüche

1. Vorrichtung zum selbsteinstellenden Versorgen eines Tunnels, einer Unterführung od.dgl. mit einem Abwärtsfrequenzkanal und einem zugeordneten Aufwärtsfrequenzkanal in einem Mobilfunksystem mit mehreren, von einer Basisstation abstrahlbaren Abwärtsfrequenzkanälen und mehreren, von einer Mobilstation abstrahlbaren, jeweils zugeordneten Aufwärtsfrequenzkanälen, dadurch gekennzeichnet,

daß ein Freiraum-Scannerempfänger (6, 10), der die von der Basisstation in den Freiraum abgestrahlten Abwärtsfrequenzkanäle abtastet und auf einen vorerst freien Abwärtsfrequenzkanal einrastet, ein dem Freiraum-Scannerempfänger (6, 10) frequenzsynchron nachgeschalteter Tunnel-Sender (7, 11), welcher diesen Abwärtsfrequenzkanal in den Tunnel abstrahlt, ein Tunnel-Scannerempfänger (8, 12), der die von der Mobilstation in den Tunnel abgestrahlten Aufwärtsfrequenzkanäle abtastet und auf einen aktiven Aufwärtsfrequenzkanal einrastet, und ein dem Tunnel-Scannerempfänger (8, 12) frequenzsynchron nachgeschalteter Freiraum-Sender (9, 13) vorgesehen sind, welcher diesen Aufwärtsfrequenzkanal in den Freiraum abstrahlt, und daß der Tunnel-Scannerempfänger im eingerasteten Zustand den Freiraum-Scannerempfänger auf den zugeordneten Abwärtsfrequenzkanal einstellt.

2. Vorrichtung nach Anspruch 1 für Mobilfunksysteme mit einem festliegenden Abwärtsfrequenzkanal und einem festliegenden Aufwärtsfrequenzkanal, die jeweils allen Abwärts- und Aufwärtsfrequenzkanälen gemeinsam zugeordnet sind, dadurch gekennzeichnet, daß ein frequenzeinstellbarer Freiraum-Empfänger (14), der den von den Basisstation in den Freiraum abgestrahlten festliegenden Abwärtsfrequenzkanal empfängt, ein dem Freiraum-Empfänger (14) frequenzsynchron nachgeschalteter Tunnel-Sender (15), welcher diesen Abwärtsfrequenzkanal in den Tunnel abstrahlt, ein frequenzeinstellbarer Tunnel-Empfänger (16), der den von der Mobilstation in den Tunnel abgestrahlten festliegenden Aufwärtsfrequenzkanal empfängt, und ein dem Tunnel-Empfänger (16) frequenzsynchron nachgeschalteter Freiraum-Sender (17) vorgesehen sind, welcher diesen Aufwärtsfrequenzkanal in den Freiraum abstrahlt.

3. Vorrichtung nach Anspruch 1 oder 2, dadurch gekennzeichnet, daß die Ausgänge der Freiraum-Empfänger, Freiraum-Scannerempfänger, Tunnel-Empfänger bzw. Tunnel-Scannerempfänger über Demodulatoren (25, 26) an eine Verarbeitungslogik (27) geführt sind, die in Abhängigkeit vom Meldungsverkehr auf den Kanälen die Sende- und Empfangsfrequenzen einstellt und durch Verändern des Meldungsverkehrs nachführt, belegt und freigibt.

4. Vorrichtung nach Anspruch 3, dadurch gekennzeichnet, daß die Freiraum-Scannerempfänger bzw. Tunnel-Scannerempfänger durch von der Verarbeitungslogik (27) angesteuerte frequenzeinstellbare Empfänger (21, 23) gebildet sind, wobei die Verarbeitungslogik (27) auf Durchstimmen der Empfangsfrequenzen programmiert ist.

5. Vorrichtung nach Anspruch 3 oder 4, dadurch gekennzeichnet, daß die Verarbeitungslogik (27) bei einem nicht in einer eingespeicherten Kanaltabelle enthaltenen, aktiven Verbindungskanal die Sendeleistung der Freiraum-Sender (9, 13, 17) reduziert.

6. Vorrichtung nach einem der Ansprüche 1 bis 5, dadurch gekennzeichnet, daß zwischen einem Freiraum-Empfänger, Freiraum-Scannerempfänger, Tunnel-Empfänger bzw. Tunnel-Scannerempfänger und dem ihm jeweils nachgeschalteten Freiraum-Sender bzw. Tunnel-Sender ein Signalregenerator zwischengeschaltet ist.

7. Vorrichtung nach Anspruch 6, dadurch gekennzeichnet, daß ein Freiraum-Empfänger, Freiraum-Scannerempfänger, Tunnel-Empfänger bzw. Tunnel-Scannerempfänger ein FM-Empfänger ist und der Signalregenerator durch den Begrenzerverstärker (30) und das Kanalbandpaßfilter (31) dieses FM-Empfängers gebildet ist.

8. Vorrichtung nach einem der Ansprüche 1 bis 7, dadurch gekennzeichnet, daß die Frequenzmischer ( 29, 26 ) eines Freiraum-Empfängers, Freiraum-Scannerempfängers, Tunnel-Empfängers bzw. Tunnel -Scannerempfängers mit den entsprechenden Frequenzmischern ( 3 2, 35 ) des jeweils nachgeschalteten Freiraum-Senders bzw. Tunnel-Senders jeweils an einen gemeinsamen (38 bzw. 39) Oszillator angeschlossen sind.

9. Vorrichtung nach einem der Ansprüche 1 bis 7, dadurch gekennzeichnet, daß der Frequenzmischer (32) eines Freiraum-Senders bzw. Tunnel-Senders an einen steuerbaren Oszillator (41) angeschlossen ist, der von einer Frequenzmeßstufe (40) angesteuert ist, deren Eingang an den Ausgang des jeweils vorgeschalteten Freiraum-Empfängers, Freiraum-Scannerempfängers, Tunnel-Empfängers bzw. Tunnel-Scannerempfängers angeschlossen ist.

10. Vorrichtung zum Versorgen eines zwischen zwei Nachbarbasisstationen liegenden Tunnels mit je einem Verbindungskanal zu einer Basisstation nach einem der Ansprüche 1 bis 9, dadurch gekennzeichnet, daß die Freiraum-Sender (9, 17), Freiraum-Empfänger (14) und Freiraum-Scannerempfänger (6) einer ersten Vorrichtung zum selbsteinstellenden Versorgen eines Tunnels mit einem Abwärtsfrequenzkanal und einem zugeordneten Aufwärtsfrequenzkanal zur einen Seite des Tunnels und die Freiraum-Sender (9', 17'), Freiraum-Empfänger (14') und Freiraum-Scannerempfänger (6') einer zweiten Vorrichtung zum selbsteinstellenden Versorgen eines Tunnels mit einem Abwärtsfrequenzkanal und einem zugeordneten Aufwärtsfrequenzkanal zur anderen Seite des Tunnels angeordnet sind und daß die Sende- und Empfangsbereiche der Tunnel-Sender (7, 15, 7', 15'), Tunnel-Empfänger (6, 6') bzw. Tunnel-Scannerempfänger (8, 8') 10 bis 100 m, vorzugsweise 20 bis 50 m jeweils von dem der zugeordneten Basisstation (2, 2') gegenüberliegenden Tunnelportal ausgehend in den Freiraum verlängert sind.

Fig.1

**Fig.2**

EP 0 465 457 A2

Fig.3

EP 0 465 457 A2

# Fig.4

# Fig.5

EP 0 465 457 A2